# EUROPÄISCHE PATENTSCHRIFT

(11) **EP 2 138 333 B1**
(45) Veröffentlichungstag und Bekanntmachung des Hinweises auf die Patenterteilung: **09.11.2011**
(21) Anmeldenummer: 09004820.8
(22) Anmeldetag: 01.04.2009
(51) Int. Cl.: B60G 5/00, B60G 17/016, B62D 53/06

(54) **Lastzug**
Truck
Camion à remorque

(30) Priorität: 30.10.2008 DE 102008054044; 27.06.2008 DE 102008030598
(43) Veröffentlichungstag der Anmeldung: 30.12.2009
(73) Patentinhaber: WABCO GmbH, 30432 Hannover (DE)
(72) Erfinder: Glavinic, Andelko, 30161 Hannover (DE); Schoppe, Michael, 30163 Hannover (DE); Stender, Axel, 31787 Hameln (DE)
(74) Vertreter: Lauerwald, Jörg

(56) Entgegenhaltungen:
- EP-A- 0 411 352
- EP-A- 1 359 085
- EP-A- 1 571 015
- WO-A-2004/028846
- WO-A-2008/054533
- DE-A1- 3 525 027

## Beschreibung

Die Erfindung betrifft eine Achshöhensteuerung für einen Lastzug, der (a) ein Sattelzugfahrzeug, das eine Vorderachse und mindestens eine Antriebsachse, die eine vorgegebene Nenn-Achslast hat, umfasst, (b) einen Sattelanhänge, der eine erste Achse und mindestens eine zweite Achse besitzt, und (c) eine Achslast-Einstellvorrichtung, die einen Achshöhenantrieb für die erste Achse umfasst, sodass eine Antriebsachsen-Achslast auf die Antriebsachse durch Verstellen einer Höhe der ersten Achse veränderbar ist, aufweist, die eingerichtet ist zum automatischen Durchführen eines Verfahrens mit dem Schritt eines Schaltens in einen Anfahrhilfe-Modus, in dem die Zweitachsen-Achslast auf eine Anfahrhilfe-Achslast erhöht wird, die unterhalb einer vorgegebenen Maximal-Achslast liegt. Die Erfindung betrifft zudem einen Lastzug mit den genannten Komponenten. Gemäß einem zweiten Aspekt betrifft die Erfindung ein Verfahren zum Betreiben eines Lastzugs.

Eine Achshöhensteuerung, die auch als Achshöhensteuervorrichtung bezeichnet werden kann, ist ein Bestandteil einer Achslast-Einstellvorrichtung von Lastzügen. Eine Achslast-Einstellvorrichtung dient dazu, mindestens eine Achse eines Sattelaufliegers des Lastzuges, insbesondere eine Liftachse, in ihrer Höhe zu verändern oder in der von ihr aufgenommenen Last zu verändern und kann in einen Anfahrhilfemodus gebracht werden.

Eine derartige Achshöhensteuerung ist aus der gattungsbildenden EP 1 571 015 A2 bekannt. Aus der WO 2008/054533 A2 geht ein System und ein Verfahren zur Steuerung der Fahrzeugmobilität hervor. Das System beinhaltet eine Steuereinrichtung, die aufgrund verschiedener Eingangssignale bestimmte Fahrzeugsysteme steuert, wie z. B. den Reifendruck oder die Dämpfungseigenschaften der Federung.

Der Anfahrhilfemodus wird verwendet, um die auf die angetriebene Antriebsachse wirkende Gewichtskraft, nämlich die Antriebsachsen-Achslast, zu erhöhen, so dass die Traktion verbessert wird. So wird erreicht, dass der Lastzug leichter anfahren kann. Zum Schutz der öffentlichen Infrastruktur ist es gesetzliche Vorschrift, dass die Achslast auf eine Achse des Lastzugs eine (gesetzlich) vorgegebene Maximal-Achslast nicht überschreiten darf. In der Europäischen

Union liegt diese Maximal-Achslast bei 130% der Nenn-Achslast, die ihrerseits durch die Zulassung des Lastzugs festgelegt ist.

Nachteilig an bekannten Achshöhensteuerungen ist, dass damit ausgerüstete Lastzüge insbesondere bei voller Beladung und unter rauen Umgebungsbedingungen nur unter Schwierigkeiten anfahren.

Der Erfindung liegt die Aufgabe zugrunde, das Anfahren unter rauen Umgebungsbedingungen zu erleichtern.

Die Erfindung löst das Problem durch eine gattungsgemäße Achshöhensteuerung, die eingerichtet ist zum automatischen Durchführen eines Verfahrens mit den Schritten Erfassen einer Aktivierung einer Geländeanfahr-Erfassungsvorrichtung und Erhöhen der Zweitachsen-Achslast auf eine Geländeanfahr-Achslast, die größer ist als die Maximal-Achslast, wenn die Geländeanfahr-Erfassungsvorrichtung aktiviert ist.

Die Erfindung löst das Problem zudem durch einen Lastzug mit (a) einem Sattelzugfahrzeug, das eine Vorderachse und mindestens eine Antriebsachse, die eine vorgegebene Nenn-Achslast hat, umfasst, (b) einem Sattelanhänger, der eine erste Achse und mindestens eine zweite Achse besitzt, und (c) einer Achslast-Einstellvorrichtung, die einen Achshöhenantrieb für die erste Achse umfasst, sodass eine Antriebsachsen-Achslast auf die Antriebsachse durch Verstellen einer Höhe der ersten Achse veränderbar ist und in einen Anfahrhilfe-Modus bringbar ist, indem die Zweitachsen-Achslast auf eine Anfahrhilfe-Achslast erhöht wird, die unterhalb einer vorgegebenen Maximal-Achslast liegt, wobei der Lastzug eine Achslast-Einstellvorrichtung mit einer erfindungsgemäßen Achshöhensteuerung umfasst.

Gemäß einem zweiten Aspekt löst die Erfindung das Problem durch ein Verfahren zum Betreiben eines Lastzugs mit den Schritten (i) Erfassen einer Aktivierung einer Geländeanfahr-Erfassungsvorrichtung des Lastzugs, (ii) Erfassen einer vorgegebenen Maximal-Achslast für eine Zweitachsen-Achslast auf eine zweite Achse eines Sattelanhängers des Lastzugs und Erhöhen der Zweitachsen-Achslast auf eine Geländeanfahr-Achslast, die größer ist als die Maximal-Achslast, wenn die Geländeanfahr-Erfassungsvorrichtung betätigt ist.

Vorteilhaft an der erfindungsgemäßen Achshöhensteuerung ist, dass eine gegenüber einer bei Lastzügen nach dem Stand der Technik möglichen Achslast erhöhte Achslast auf die Antriebsachse aufbringbar ist, wenn der Untergrund das erfordert. Der Erfindung liegt die Erkenntnis zugrunde, dass eine derartige Erhöhung der Achslast über die gesetzlich zulässige Maximal-Achslast hinaus in der Regel nur dann notwendig ist, wenn besonders ungünstige Bodenbedingungen vorliegen. Derartige ungünstige Bodenbedingungen existieren jedoch selten auf öffentlichen Verkehrswegen, sondern beispielsweise auf Baustellen oder sonstigem Privatgrund. In derartigen Bereichen ist aber eine Erhöhung der Achslast auf die Antriebsachse über die gesetzlich vorgegebene Maximal-Achslast zulässig. Die erfindungsgemäße Achshöhensteuerung ermöglicht damit ein erleichtertes Anfahren unter erschwerten Bedingungen, ohne dass gesetzliche Vorgaben verletzt werden.

Vorteilhaft an der Erfindung ist zudem, dass sie mit nur geringerem Aufwand umsetzbar ist. So ist es ausreichend, eine Geländeanfahr-Erfassungsvorrichtung vorzusehen, die beispielsweise durch einen einfachen Schalter oder ein sonstiges Bedienelement gebildet sein kann. Alternativ oder additiv kann die Geländeanfahr-Erfassungsvorrichtung ein Teil einer zentralen Steuerung sein, die zum Erfassen mangelnder Traktion, insbesondere eines Durchdrehens von Rädern der Antriebsachse, eingerichtet ist. Es ist zudem möglich, als Gelände-Anfahrerfassungsvorrichtung ein standardmäßiges Bedienelement zu verwenden, beispielsweise ein bereits vorhandenes Multifunktions-Bedienelement. Die Achshöhensteuerung muss lediglich neu programmiert werden, um ein verbessertes Anfahren zu erlauben.

Im Rahmen der vorliegenden Beschreibung wird unter der Achslast-Einstellvorrichtung insbesondere jede Vorrichtung verstanden, die eingerichtet und ausgebildet ist, um die Achslast auf die mindestens eine Antriebsachse dauerhaft und gezielt zu verändern. Es kann sich bei der Achslast-Einstellvorrichtung um eine Steuerung und/oder um eine Regelung handeln.

Unter dem Merkmal, dass die Achshöhensteuerung ausgebildet ist, um in den Anfahrhilfe-Modus zu schalten, ist insbesondere zu verstehen, dass die Achshöhensteuerung in einen Programmmodus schaltbar ist, in dem die Achslast-Einstellvorrichtung einen Achshöhenantrieb des Lastzugs so ansteuert, dass die Achslast auf eine Achse des Sattelanhängers erhöht wird, wodurch sich die auf die Antriebsachse wirkende Achslast erhöht. Dabei liegt die Achslast auf diese Achse oberhalb der Nenn-Achslast, jedoch stets unterhalb der vorgegebenen Maximal-Achslast.

Die Maximal-Achslast, die Nenn-Achslast und/oder die Grenz-Achslast, die eine absolute obere Grenze insbesondere für die Zweitachsen-Achslast darstellt, sind beispielsweise in einem digitalen Speicher hinterlegt und entsprechen insbesondere den gesetzlichen Bestimmungen für den Betrieb des Lastzugs auf öffentlichen Verkehrsflächen.

Die Werte für die Maximal-Achslast und die Nenn-Achslast beispielsweise für die Zweitachsen-Achslast sind zwar gesetzlich vorgegeben, sie werden aber durch das Fest-vorgegeben-Sein in der Achslast-Einstellvorrichtung zu einem technischen Regel- und/oder Steuerparameter für die Achslast-Einstellvorrichtung.

Der Sattelanhänger des erfindungsgemäßen Lastzugs umfasst eine erste Achse und mindestens eine zweite Achse, wobei die erste Achse in der Regel zwischen dem Sattelzugfahrzeug und der zweiten Achse angeordnet ist. Die erste Achse ist mittels eines zugeordneten Achshöhenantriebs höhenverstellbar und die Achslast-Einstellvorrichtung, die die Achshöhensteuerung umfasst, ist eingerichtet zum Einstellen der Achslast mittels Ansteuerns des Achshöhenantriebs.

Bei gegebener Beladung des Sattelanhängers kann durch Verändern der Achshöhen oder -lasten der ersten Achse relativ zur zweiten Achse der dem Sattelzugfahrzeug abgewandte Drehpunkt des Sattelanhängers variiert werden. Auf diese Weise kann der Schwerpunkt des Sattelanhängers auf die Sattelzugmaschine zu oder von der Sattelzugmaschine weg bewegt werden. Auf diese Weise wird die Antriebsachsen-Achslast erhöht.

Es ist zudem möglich, dass eine dritte Achse zwischen der ersten Achse und der zweiten Achse vorhanden ist. Es ist dann möglich, dass die erste Achse und die dritte Achse über jeweils einen Achshöhenantrieb verstellbar sind.

Es ist zudem möglich, dass der Achshöhenantrieb so ausgebildet ist, dass er die jeweilige Achse gemäß einem Betriebsmodus anheben und gemäß einem zweiten Betriebsmodus lediglich entlasten kann. Dazu können beispielsweise zwei antagonistische Pneumatikbälge vorgesehen sein. Eine derartige Entlastung führt aufgrund der Auffederung der Räder der Achse ebenfalls zu einer kleinen Änderung der Achshöhe, sodass auch ein Entlasten der Achse ein Verstellen der Höhe der Achse ist.

Gemäß einer bevorzugten Ausführungsform ist die Achshöhensteuerung ausgebildet zum Erfassen einer auf die zweite Achse wirkenden Zweitachsen-Achslast, wobei die Achshöhensteuerung eingerichtet ist zum Einstellen der Antriebsachsen-Achslast anhand der Zweitachsen-Achslast. Wenn eine dritte Achse vorhanden ist, kann auch diese einen Achslastsensor zum Messen einer Drittachsen-Achslast aufweisen und die Achslast-Einstellvorrichtung ist eingerichtet ist zum Einstellen der Antriebsachsen-Achslast anhand der Zweitachsen-Achslast und gegebenenfalls der Drittachsen-Achslast.

Es kann sich bei diesem Achslastsensor, der Bestandteil eines Lastzugs gemäß einer bevorzugten Ausführungsform der Erfindung ist, beispielsweise um einen Sensor handeln, der die Zweitachsen -und/oder Drittachsen-Achslast direkt misst, insbesondere mittels Dehnungsmessstreifen. Alternativ misst der Achslastsensor die Achslast indirekt, beispielsweise durch Messen eines Luftdrucks in einem Luftbalg der jeweiligen Antriebsachse.

Bevorzugt wird die Maximal-Achslast als 130% der Nenn-Achslast gewählt. Dieser Wert entspricht den gesetzlichen Vorgaben für den Betrieb eines Lastzuges auf öffentlichen Verkehrsflächen in der europäischen Union. Diese Maximal-Achslast wird bereits heute in bestehenden Systemen verwendet.

Bevorzugt beträgt die Geländeanfahr-Achslast höchstens 200% der Nenn-Achslast. Bekannte Achsen sind so ausgelegt, dass eine derartige Geländeanfahr-Achslast ohne konstruktive Änderungen aufbringbar ist. Vorteilhafterweise kann so die Traktion beim Anfahren im schwierigen Gelände verbessert werden, ohne dass konstruktive Änderungen am Lastzug notwendig sind. Achslasten über 130% werden im Moment aufgrund der gesetzlichen Vorgaben nicht eingesetzt.

Um eine dauerhafte Belastung der mindestens einen zweiten Achse zu vermeiden und um damit eine Alterung zu verringern, ist bevorzugt vorgesehen, dass die Achshöhensteuerung eine Zeitmessvorrichtung umfasst, die eingerichtet ist zum Erfassen einer Zeitspanne, die seit einem Zeitpunkt vergangen ist, ab dem die Zweitachsen-Achslast die Maximal-Achslast übersteigt, zum Vergleichen dieser Zeitspanne mit einer vorgegebenen Maximalzeit und zum Senken der Zweitachsen-Achslast auf unter die Maximal-Achslast, wenn die Maximalzeit überschritten ist. Es hat sich gezeigt, dass eine Maximalzeit, die beispielsweise eine Minute betragen kann, existiert, nach deren Verstreichen der Lastzug entweder erfolgreich angefahren ist oder nach der das Anfahren dauerhaft gescheitert ist. Durch das Vorsehen der Maximalzeit ist sichergestellt, dass ein wiederholtes Versuchen des Anfahrens unterbleibt, so dass die zweite Achse nicht über Gebühr altert.

Unter der Zeitmessvorrichtung wird insbesondere jede Vorrichtung verstanden, die Teil der Achshöhensteuerung oder mit dieser verbunden ist, um die Zeitspanne zu messen, während der die Zweitachsen-Achslast die Maximal-Achslast übersteigt. Es ist möglich, dass hierzu eine beispielsweise in einer Motorsteuerung vorhandene Uhr verwendet wird. Alternativ oder additiv ist eine gesonderte Uhr vorgesehen.

Gemäß einer bevorzugten Ausführungsform ist die Achshöhensteuerung eingerichtet zum Erfassen einer Fahrgeschwindigkeit des Lastzugs, zum Vergleichen der Fahrgeschwindigkeit mit einem vorgegebenen Fahrgeschwindigkeits-Schwellenwert und zum Senken der Zweitachsen-Achslast auf unter die (gesetzlich für öffentliche Verkehrsflächen zulässige) Maximal-Achslast, wenn der Endgeschwindigkeits-Schwellenwert überschritten ist. Beispielsweise ist Achshöhensteuerung ausgebildet, um mit einem Tachometer des Lastzugs verbunden zu werden. Je höher die Fahrgeschwindigkeit des Lastzugs ist, umso größer können auf die Achsen wirkende Kräfte aufgrund von Fahrbahnunebenheiten werden. Hinzu kommt, dass das Anfahren besonders bei sehr niedrigen Geschwindigkeiten oder aus dem Stand heraus problematisch ist. Sobald der Lastzug eine gewisse Geschwindigkeit erreicht hat, ist für das weitere Beschleunigen eine geringere Antriebsachsen-Achslast als zum unmittelbaren Anfahren ausreichend.

Es kann vorgesehen sein, dass die Zweitachsen-Achslast und damit die Antriebsachsen-Achslast mit zunehmender Geschwindigkeit kontinuierlich verringert werden. Hierunter ist zu verstehen, dass die Achshöhensteuerung beispielsweise beständig die Fahrgeschwindigkeit erfasst und die auf die Antriebsachse wirkende Achslast kontinuierlich an die Fahrgeschwindigkeit anpasst. So können mehrere Fahrgeschwindigkeits-Schwellenwerte vorgesehen sein, bei deren Überschreiten die Zweitachsen-Achslast und damit die Antriebsachsen-Achslast verringert werden.

Bevorzugt ist die Achshöhensteuerung eingerichtet zum Erfassen der Fahrgeschwindigkeit, zum Vergleichen der Fahrgeschwindigkeit mit einem vorgegebenen Startgeschwindigkeits-Schwellenwert und zum Erhöhen der Zweitachsen-Achslast auf eine Geländeanfahr-Achlast nur dann, wenn der Startgeschwindigkeits-Schwellenwert unterschritten ist. In anderen Worten ist die Achslast-Einstellvorrichtung so eingestellt, dass sie die Zweitachsen-Achslast auf höchstens die Maximal-Achslast einregelt, wenn der Startgeschwindigkeits-Schwellenwert unterschritten ist. So wird verhindert, dass die Zweitachsen-Achslast zu einem Zeitpunkt auf einen Wert oberhalb der Maximal-Achslast erhöht wird, zu dem eine Anfahrhilfe nicht benötigt wird, weil das Anfahren bereits abgeschlossen ist.

Um sicherzustellen, dass die gesetzlichen Vorschriften hinsichtlich der maximal zulässigen Achslasten stets eingehalten werden, ist die Achshöhensteuerung bevorzugt zum Verbinden mit einer Positionserfassungsvorrichtung, insbesondere einer Satellitennavigationsvorrichtung oder einem ortsfesten Triangulationsfunknetz, ausgebildet und eingerichtet zum Erfassen einer Position des Lastzugs, zum Ermitteln, ob sich der Lastzug in einem vorgegebenen Gebiet befindet, und zum Erhöhen der Zweitachsen-Achslast auf eine Geländeanfahr-Achslast nur dann, wenn sich der Lastzug in dem vorgegebenen Gebiet befindet. Es ist möglich, dass die Positionserfassungsvorrichtung integraler Teil der Achshöhensteuerung ist.

In einem erfindungsgemäßen Lastzug ist bevorzugt eine Positionserfassungsvorrichtung eingebaut, die Teil der Achshöhensteuerung oder mit dieser verbunden sein kann. Beispielsweise verfügt der Lastzug über ein GPS-System (GPS, global positioning system, Globales Positionsermittlungssystem).

Das vorgegebene Gebiet ist beispielsweise in einem digitalen Speicher der Achshöhensteuerung gespeichert und bezeichnet ein Gebiet, in dem die Zweitachsen-Achslast auf einen Wert oberhalb der Maximal-Achslast erhöht werden darf, ohne dass gesetzliche Auflagen verletzt werden. Beispielsweise ist das vorgegebene Gebiet eine Baustelle, also ein Privatgrundstück, auf dem die Vorschriften für die maximal zulässige Achslast nicht gelten. Um Manipulationen zu vermeiden, kann vorgesehen sein, dass der digitale Speicher, in dem das vorgegebene Gebiet gespeichert ist, ein Nur-Lese-Speicher ist. Es kann zudem vorgesehen sein, dass immer dann, wenn die Zweitachsen-Achslast über die Maximal-Achslast erhöht wird, ein Eintrag in einem Datenschreiber erzeugt wird.

Es ist möglich, dass die Achshöhensteuerung ausgebildet ist, um mit einer Antischlupf-Regelung verknüpft zu werden, wobei die Achslast-Einstellvorrichtung eingerichtet ist zum Erhöhen der Zweitachsen-Achslast, wenn ein Durchrutschen der Räder der Antriebsachse erfasst wird. So wird erreicht, dass stets die optimale Achslast auf die Antriebsachse aufgebracht wird, ohne dass gesetzliche Vorgaben verletzt werden.

Gemäß einer bevorzugten Ausführungsform umfasst die Achshöhensteuerung einen digitalen Speicher, in dem die Nenn-Achslast, die Maximal-Achslast und/oder die Grenz-Achslast abgelegt sind. Die Nenn-Achslast und die Maximal-Achslast sind insbesondere mit einem räumlichen Gebiet verknüpft sind, für das sie gelten. Wird ein Lastzug in verschiedenen Gegenden der Welt eingesetzt, so können sich die gesetzlichen Vorgaben hinsichtlich der gesetzlich maximal zulässigen Maximal-Achslast und/oder der Nenn-Achslast unterscheiden. Dadurch, dass diese Werte mit einem räumlichen Gebiet, beispielsweise mit den Staatsgebieten aller EU-Mitgliedsstaaten, verknüpft sind, ist sichergestellt, dass die jeweils geltenden gesetzlichen Vorgaben immer eingehalten werden. Gleichzeitig ist sichergestellt, dass außerhalb des Geltungsbereichs des entsprechenden Gesetzes diejenige Achslast auf die Antriebsachse aufbringbar ist, die für das Anfahren optimal ist. Das heißt, es wird stets die Achslast gewählt, die einerseits ein sicheres Anfahren ermöglicht und andererseits möglichst gering ist, um einen Verschleiß der Antriebsachse zu vermeiden.

In einem erfindungsgemäßen Lastzug umfasst die Geländeanfahr-Erfassungsvorrichtung bevorzugt ein Geländeanfahr-Bedienelement, beispielsweise in einer Fahrkabine des Sattelzugfahrzeugs, und wirkt so mit der Achslast-Einstellvorrichtung zusammen, dass die Zweitachsen-Achslast durch Betätigen des Geländeanfahr-Bedienelements gemäß mindestens einer vorgegebenen Bediensequenz veränderbar ist.

Es kann sich bei dem Geländeanfahr-Bedienelement beispielsweise um einen Multifunktionsschalter handeln, der in eine Mehrzahl von Stellungen bringbar ist, wobei eine der Stellungen anzeigt, dass sich der Lastzug auf einem nichtöffentlichen Geländestück bewegt, so dass die Achslast über eine gesetzlich maximal zulässige Maximal-Achslast angehoben werden kann.

Es ist zudem möglich, dass das Geländeanfahr-Bedienelement mehrere Schaltstellungen besitzt, die mehreren Achslasten oberhalb der Maximal-Achslast entsprechen. Es ist auch möglich, dass das Geländeanfahr-Bedienelement durch eine Bediensequenz nur eines Schaltelements so bedienbar ist, dass die Achslast gesteigert wird. So kann beispielsweise die Anzahl der Bedienaktionen gezählt werden, die innerhalb eines vorgegebenen Zeitintervalls erfolgt. Je öfter das Bedienelement betätigt wird, umso höher ist die Achslast.

Im Folgenden wird ein exemplarisches Ausführungsbeispiel der Erfindung anhand der beigefügten Zeichnungen näher erläutert. Dabei zeigt
- Figur 1: eine schematische Ansicht eines erfindungsgemäßen Lastzugs mit und einer erfindungsgemäßen Achshöhensteuerung und
- Figur 2: ein Flussdiagramm eines erfindungsgemäßen Verfahrens.

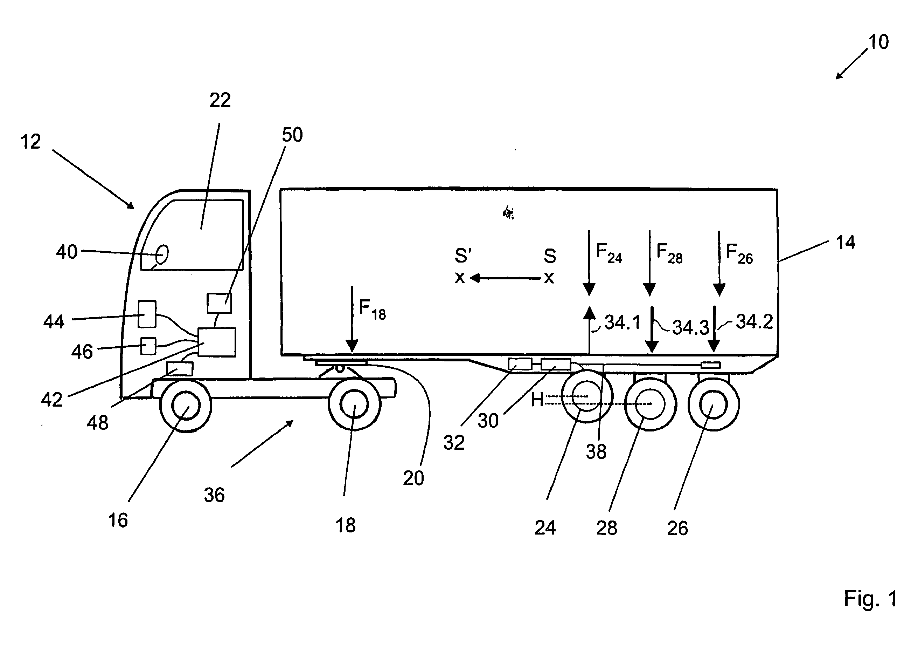

Figur 1 zeigt einen Lastzug 10, der ein Sattelzugfahrzeug 12 und einen Sattelanhänger 14 umfasst. Das Sattelzugfahrzeug 12 besitzt eine Vorderachse 16 und eine von einem nicht eingezeichneten Motor angetriebene Antriebsachse 18. Im Bereich oberhalb der Antriebsachse 18 ist ein Auflager 20 vorhanden, auf dem der Sattelanhänger 14 aufliegt und mit dem der Sattelanhänger 14 angekuppelt ist. Das Sattelzugfahrzeug 12 besitzt eine Fahrerkabine 22 für einen nicht eingezeichneten Fahrer des Lastzugs 10.

Der Sattelanhänger 14 hat eine erste Achse 24, eine zweite Achse 26 und ein dritte Achse 28. Zumindest die erste Achse 24 ist über einen schematisch angedeuteten Achshöhenantrieb 30, beispielsweise mittels Pneumatik-Bälgen, höhenverstellbar. Es ist möglich, dass auch die dritte Achse 28 über einen zugeordneten Achshöhenantrieb höhenverstellbar ist.

Der Achshöhenantrieb 30 ist mit einer Achshöhensteuerung 32 verbunden, die den Achshöhenantrieb 30 so ansteuert, dass die erste Achse 24 eine vorgegebene Höhe H hat, die als Auslenkung der Achsmittelpunkte aus einer Nullage gemessen wird, bei der alle Achsen 24, 26, 28 gleich belastet sind.

Je nach der jeweiligen Höhe H der ersten Achse 24 liegt ein Schwerpunkt S des Sattelanhängers 14 näher oder weiter entfernt von dem Sattelzugfahrzeug 12. Wird beispielsweise die Achshöhe H der ersten Achse 24 erhöht, wie dies durch einen ersten Pfeil 34.1 angedeutet ist, und dadurch die Achshöhen H der zweiten Achse 26 und der dritten Achse 28 verringert, wie dies durch Pfeile 34.2 und 34.3 angedeutet ist, so verschiebt sich der Schwerpunkt S auf den Schwerpunkt S', der sich dichter beim Sattelzugfahrzeug 12 befindet. Dadurch wiederum steigt eine Antriebsachsen-Achslast F₁₈ auf die Antriebsachse 18.

Der Achshöhenantrieb 30 und die Achshöhensteuerung 32 sind Teil einer Achslasteinstellvorrichtung 36, die außerdem einen Achslastsensor 38 und ein Geländeanfahr-Bedienelement 40 in Form eines Multifunktionsschalters in der Fahrerkabine 22 umfasst. Die Achslast-Einstellvorrichtung 36 umfasst zudem eine Datenverarbeitungseinheit 42, die mit dem Achslastsensor 38, der Achshöhensteuerung 32 und dem Geländeanfahr-Bedienelement 40 verbunden ist.

Die Datenverarbeitungseinheit 42 steht in Kontakt mit einem Geschwindigkeitsmesser 44 in Form eines Tachometers und einer Positionserfassungsvorrichtung 46 in Form eines GPS-Empfängers. Die Datenverarbeitungseinheit 42 kann mit einer Motorsteuerung 48 verbunden oder Teil der Motorsteuerung 48 sein.

In einem digitalen Speicher 50 der Datenverarbeitungseinheit 42 sind Werte für eine Nenn-Achslast F_{Nenn}, eine Maximal-Achslast Fₘₐₓ und eine Grenz-Achslast F_{Grenz} abgelegt. Beim Betrieb des Lastzugs 10 erfasst die Datenverarbeitungseinheit 42 beständig, ob eine Situation vorliegt, in der die Antriebsachse 18 erhöht werden sollte, um ein Anfahren zu erleichtern. Das kann beispielsweise dadurch geschehen, indem beständig das Geländeanfahr-Bedienelement 40 auf seine Stellung hin überprüft wird.

Stellt ein Fahrer des Lastzugs 10 das Geländeanfahr-Bedienelement auf eine Geländeanfahrhilfe-Stellung, so steuert die Datenverarbeitungseinheit 42 die Achshöhensteuerung 32 so an, dass diese wiederum die Achshöhenantriebe 30 so betätigt, dass der Schwerpunkt S sich auf das Sattelzugfahrzeug 12 zu bewegt und dadurch die Achslast F₁₈ erhöht. So kann die Achslast F₁₈ dann oberhalb ihrer Nenn-Achslast liegen. Dazu wird die erste Achse 24 auf eine größere Höhe H gebracht, so dass sie weniger Last trägt und die zweite Achse 26 eine Zweitachsen-Achslast F₂₆ und die dritte Achse 28 (die eine zweite "zweite Achse" gemäß den Ansprüchen ist) eine Drittachsen-Achslast F₂₈ erhalten, die oberhalb deren Maximal-Achslast Fₘₐₓ liegt. Die Achslasten F₂₆ und F₂₈ werden dabei stets unterhalb einer Grenz-Achslast F_{Grenz} gehalten, die eine auslegungsbedingte Obergrenze der Belastbarkeit der Achsen 26, 28 darstellt. Wenn das Geländeanfahr-Bedienelement in seine Normalstellung zurückbewegt wird, wird die Achslast F₁₈ gesenkt, indem die erste Achse auf Höhe null gebracht wird und wieder die volle Last aufnimmt.

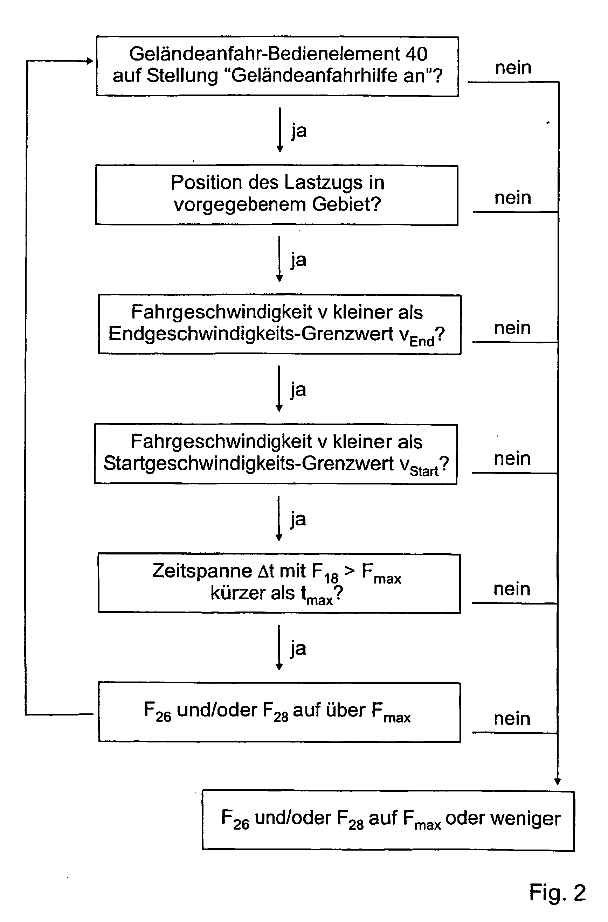

Figur 2 zeigt ein schematisches Flussdiagramm für das in der Datenverarbeitungseinheit 42 ablaufende Programm. Zunächst wird überprüft, ob das Geländeanfahr-Bedienelement 40 auf einer Stellung "Geländeanfahrhilfe an" geschaltet ist. Ist dass der Fall, wird überprüft, ob die durch die Positionserfassungsvorrichtung 46 ermittelte Position P des Lastzugs 10 innerhalb eines Gebietes G liegt, in dem die Achslast auf einen Wert oberhalb der Maximal-Achslast Fₘₐₓ erhöht werden darf. Dazu greift die Datenverarbeitungseinheit 42 beispielsweise auf eine digitale Karte zurück.

Anschließend wird überprüft, ob eine Fahrgeschwindigkeit v des Lastzugs 10 kleiner ist als ein Endgeschwindigkeits-Grenzwert v_{End} bzw. kleiner als ein Startgeschwindigkeits-Grenzwert V_{Start}. Sofern das der Fall ist, wird die Zweitachsen-Achslast F₂₆ oder die Zweitachsen-Achslast F₂₆ und die Drittachsen-Achslast F₂₈ auf einen Wert oberhalb der Maximal-Achslast Fₘₐₓ erhöht. Das stellt einen ersten Zeitpunkt t₁ dar und es beginnt die Zeitspanne Δt, die beständig mit einer Maximalzeit tₘₐₓ verglichen wird.

Sobald eine der genannten Bedingungen nicht erfüllt ist, steuert die Datenverarbeitungseinheit 42 die Achshöhensteuerung 32 so an, dass diese wiederum die Achshöhe H so verändert, dass der Schwerpunkt S sich vom Sattelzugfahrzeug 12 weg bewegt und damit die Achslast(en) F₂₆ bzw. F₂₈ auf einen Wert verringert, der höchstens der Maximal-Achslast Fₘₐₓ entspricht.

## Patentansprüche

1. Achshöhensteuerung für einen Lastzug (10), der
(a) ein Sattelzugfahrzeug (12), das
- eine Vorderachse (16) und
- mindestens eine Antriebsachse (18), die eine vorgegebene
Nenn-Achslast (F_{Nenn}) hat, umfasst,
(b) einen Sattelanhänger (14), der
- eine erste Achse (24) und
- mindestens eine zweite Achse (26, 28) besitzt, und
(c) eine Achslast-Einstellvorrichtung (36), die einen Achshöhenantrieb (30) für die erste Achse (24) umfasst, sodass eine Antriebsachsen-Achslast (F₁₈) auf die Antriebsachse (18) durch Verstellen einer Höhe (H) der ersten Achse (24) veränderbar ist,
die eingerichtet ist zum
- Schalten in einen Anfahrhilfe-Modus, in dem die Zweitachsen-Achslast (F₂₆, F₂₈) auf eine Anfahrhilfe-Achslast erhöht wird, die stets unterhalb einer vorgegebenen für öffentliche Verkehrsflächen gesetzlich zulässigen Maximal-Achslast (Fₘₐₓ) von 130 % der Nenn-Achslast (F_{Nenn}) liegt,
**dadurch gekennzeichnet, dass**
die Achshöhensteuerung eingerichtet ist zum
- Erfassen einer Aktivierung einer Geländeanfahr-Erfassungsvorrichtung (40) und
- Erhöhen der Zweitachsen-Achslast (F₂₆, F₂₈) auf eine Geländeanfahr-Achslast (F_{anfahr}), die größer ist als die Maximal-Achslast (Fₘₐₓ), wenn die Geländeanfahr-Erfassungsvorrichtung (40, 42) aktiviert ist.

2. Achshöhensteuerung nach Anspruch 1, **dadurch gekennzeichnet, dass** sie ausgebildet ist zum Erniedrigen der Zweitachsen-Achslast (F₂₆, F₂₈) auf einen Wert oder Halten auf dem Wert, der kleiner ist als die Maximal-Achslast (Fₘₐₓ), wenn die Geländeanfahr-Erfassungsvorrichtung (40, 42) deaktiviert ist.

3. Achshöhensteuerung nach einem der vorstehenden Ansprüche, **dadurch gekennzeichnet, dass** sie ausgebildet ist zum Erfassen einer auf die zweite Achse (26) wirkenden Zweitachsen-Achslast (F₂₆) von einem Achslastsensor (38), wobei die Achslast-Einstellvorrichtung (36) eingerichtet ist zum Verändern der Antriebsachsen-Achslast (F₁₈) mittels der Zweitachsen-Achslast (F26).

4. Achshöhensteuerung nach einem der vorstehenden Ansprüche, **dadurch gekennzeichnet, dass** die Geländeanfahr-Achslast (F_{anfahr}) stets weniger als 200% der Nenn-Achslast (F_{Nenn}) beträgt.

5. Achshöhensteuerung nach einem der vorhergehenden Ansprüche, **gekennzeichnet durch** eine Zeitmessvorrichtung, wobei die Achshöhensteuerung eingerichtet ist zum
- Erfassen einer Zeitspanne (Δt), die seit einem Zeitpunkt (t₁) vergangen ist, ab dem die Achslast (F₁₈) die Maximal-Achslast (Fₘₐₓ) übersteigt,
- Vergleichen dieser Zeitspanne (Δt) mit einer vorgegebenen Maximalzeit (tₘₐₓ) und
- Senken der Zweitachsen-Achslast (F₂₆) auf höchstens die Maximal-Achslast (F₁₈), wenn die Maximalzeit (tₘₐₓ) überschritten ist.

6. Achshöhensteuerung nach einem der vorstehenden Ansprüche, **dadurch gekennzeichnet, dass** sie eingerichtet ist zum Erfassen einer Fahrgeschwindigkeit (v) des Lastzugs (10) von einem Geschwindigkeitsmesser (44) und eingerichtet ist zum automatischen
- Erfassen der Fahrgeschwindigkeit (v),
- Vergleichen der Fahrgeschwindigkeit (v) mit einem vorgegebenen Endgeschwindigkeits-Schwellenwert (v_{End}) und
- Senken der Zweitachsen-Achslast (F₂₆) auf höchstens die Maximal-Achslast (Fₘₐₓ), wenn der Endgeschwindigkeits-Schwellenwert (v_{End}) überschritten ist.

7. Achshöhensteuerung nach einem der vorstehenden Ansprüche, **dadurch gekennzeichnet, dass** die Achslast-Einstellvorrichtung (36) eingerichtet ist zum automatischen
- Erfassen der Fahrgeschwindigkeit (v),
- Vergleichen der Fahrgeschwindigkeit (v) mit einem vorgegebenen Startgeschwindigkeits-Schwellenwert (vₛₜₐᵣₜ) und
- Erhöhen der Zweitachsen-Achslast (F₂₆) auf die Geländeanfahr-Achslast (F_{anfahr}) oberhalb der Maximal-Achslast (_{Fmax}) nur dann, wenn der Startgeschwindigkeits-Schwellenwert (v_{Start}) unterschritten ist.

8. Achshöhensteuerung nach einem der vorstehenden Ansprüche, **dadurch gekennzeichnet, dass** sie zum Verbinden mit einer Positionserfassungsvorrichtung (46), insbesondere eine Satellitennavigationsvorrichtung, ausgebildet und eingerichtet ist zum
- Erfassen einer Position (P) des Lastzugs (10)
- Ermitteln, ob sich der Lastzug (10) in einem vorgegebenen Gebiet (G) befindet, und
- Erhöhen der Zweitachsen-Achslast (F₂₆) auf die Geländeanfahr-Achslast (F_{anfahr}) oberhalb der Maximal-Achslast (Fₘₐₓ) nur dann, wenn sich der Lastzug (10) in dem vorgegebenen Gebiet (G) befindet.

9. Achshöhensteuerung nach Anspruch 8, **dadurch gekennzeichnet, dass** das vorgegebene Gebiet (G) eine nicht-öffentliche Verkehrsfläche ist.

10. Achshöhensteuerung nach einem der vorstehenden Ansprüche, **gekennzeichnet durch** einen digitalen Speicher, in dem die Nenn-Achslast (F₁₈) und die Maximal-Achslast (Fₘₐₓ) abgelegt sind, wobei die Nenn-Achslast (F_{Nenn}) und die Maximal-Achslast (Fₘₐₓ) insbesondere mit einem räumlichen Gebiet (G) verknüpft sind, für das sie gelten.

11. Lastzug mit
(a) einem Sattelzugfahrzeug (12), das
(i) eine Vorderachse (16) und
(ii) mindestens eine Antriebsachse (18), die eine vorgegebene Nenn-Achslast (F_{Nenn}) hat, umfasst,
(d) einem Sattelanhänger (14), der
(i) eine erste Achse (24) und
(ii) mindestens eine zweite Achse (26, 28) besitzt, und
(e) einer Achslast-Einstellvorrichtung (36), die
(i) einen Achshöhenantrieb (30) für die erste Achse (24) umfasst, sodass eine Antriebsachsen-Achslast (F₁₈) auf die Antriebsachse (18) durch Verstellen einer Höhe (H) der ersten Achse (24) veränderbar ist und
(ii) in einen Anfahrhilfe-Modus bringbar ist, in dem die Zweitachsen-Achslast (F₂₆, F₂₈) auf eine Anfahrhilfe-Achslast erhöht wird, die unterhalb einer vorgegebenen Maximal-Achslast (Fₘₐₓ) liegt, **gekennzeichnet durch**
(f) eine Achslast-Einstellvorrichtung (36) mit einer Achshöhensteuerung nach einem der vorstehenden Ansprüche.

12. Lastzug nach Anspruch 11, **gekennzeichnet durch** eine Geländeanfahr-Erfassungsvorrichtung (40, 42).

13. Lastzug nach Anspruch 11 oder 12, **dadurch gekennzeichnet, dass** der Sattelanhänger einen Achslastsensor (38) zum Messen einer auf die zweite Achse (26) wirkenden Zweitachsen-Achslast (F₂₆) umfasst.

14. Lastzug nach einem der Ansprüche 12 bis 13, **dadurch gekennzeichnet, dass** die Geländeanfahr-Erfassungsvorrichtung (40, 42)
- ein Geländeanfahr-Bedienelement (40) in einer Fahrerkabine (22) des Sattelzugfahrzeugs (12) umfasst und
- so mit der Achslast-Einstellvorrichtung (36) zusammenwirkt, dass die Zweitachsen-Achslast (F₂₆) durch Betätigen des Geländeanfahr-Bedienelements gemäß mindestens einer vorgegebenen Betätigungssequenz veränderbar ist.

15. Verfahren zum Betreiben eines Lastzugs (10) nach einem der Ansprüche 11 bis 14, mit den Schritten
(i) Erfassen einer Aktivierung einer Geländeanfahr-Erfassungsvorrichtung (40),
(ii) Erfassen einer vorgegebenen Maximal-Achslast (Fₘₐₓ) für eine Zweitachsen-Achslast (F₂₄) auf eine zweite Achse (24) eines Sattelanhängers (14) des Lastzugs (10) und
(iii) Erhöhen der Zweitachsen-Achslast (F₂₄) auf eine Geländeanfahr-Achslast (F_{anfahr}), die größer ist als die Maximal-Achslast (Fₘₐₓ), wenn die Geländeanfahr-Erfassungsvorrichtung (40) betätigt ist.

16. Verfahren nach Anspruch 15, **gekennzeichnet durch** den Schritt:
- Erfassen einer Position (P) des Lastzugs (10) und
- Ermitteln, ob die Position (P) innerhalb eines vorgegebenen Gebiets (G) liegt,
- wobei die Zweitachsen-Achslast (F₂₄) nur dann auf die Geländeanfahr-Achslast (F_{anfahr}), die größer ist als die Maximal-Achslast (Fₘₐₓ), erhöht wird, wenn die Position innerhalb des Gebiets (G) liegt.

## Claims

1. Axle center height controller for a tractor-trailer combination (10) which comprises
(a) a semitrailer tractor (12)
- a front axle (16) and
- at least one drive axle (18) which has a predefined nominal axle load (F_{Nom}),
(b) a semitrailer (14) which has
- a first axle (24) and
- at least one second axle (26, 28), and
(c) an axle load adjusting device (36) which comprises an axle center height drive (30) for the first axle (24), so that a drive-axle axle load (F₁₈) acting on the drive axle (18) can be changed by adjusting a center height (H) of the first axle (24),
which is configured
- to switch into a starting assistance mode in which the second-axle axle load (F₂₆, F₂₈) is increased to a starting-assistance axle load which is always below a predefined maximum axle load (Fₘₐₓ) of 130% of the nominal axle load (Fₙₒₘ) legally approved for public traffic areas,
**characterized in that**
the axle center height controller is configured
- to sense activation of an offroad starting sensing device (40), and
- to increase the second-axle axle load (F₂₆, F₂₈) to an offroad starting axle load (F_{starting}) which is greater than the maximum axle load (Fₘₐₓ) if the offroad starting sensing device (40, 42) is activated.

2. Axle center height controller according to Claim 1, **characterized in that** it is designed to reduce the second-axle axle load (F₂₆, F₂₈) to a value or to keep it at the value which is lower than the maximum axle load (Fₘₐₓ) if the offroad starting sensing device (40, 42) is deactivated.

3. Axle center height controller according to one of the preceding claims, **characterized in that** it is designed for the sensing of a second-axle axle load (F₂₆), acting on the second axle (26), by an axle load sensor (38), wherein the axle load adjusting device (36) is configured for the changing of the drive-axle axle load (F₁₈) by means of the second-axle axle load (F₂₆)_{.}

4. Axle center height controller according to one of the preceding claims, **characterized in that** the offroad starting axle load (F_{starting}) is always less than 200% of the nominal axle load (F_{Nom}).

5. Axle center height controller according to one of the preceding claims, **characterized by** a time measuring device, wherein the axle center height controller is configured to perform
- sensing of a time period (Δt) which has passed since a time (t₁) from which the axle load (F₁₈) exceeds the maximum axle load (Fₘₐₓ),
- comparison of this time period (Δt) with a predefined maximum time (tₘₐₓ), and
- reduction of the second-axle axle load (F₂₆) to at most the maximum axle load (F₁₈) if the maximum time (tₘₐₓ) is exceeded.

6. Axle center height controller according to one of the preceding claims, **characterized in that** it is configured for the sensing of a velocity (v) of the tractor-trailer combination (10) by a speedometer (44) and is configured to perform automatic
- sensing of the velocity (v),
- comparison of the velocity (v) with a predefined final velocity threshold value (v_{final}) and
- reduction of the second-axle axle load (F₂₆) to at most the maximum axle load (Fₘₐₓ) if the final velocity threshold value (v_{final}) is exceeded.

7. Axle center height controller according to one of the preceding claims, **characterized in that** the axle load adjusting device (36) is configured to perform automatic
- sensing of the velocity (v),
- comparison of the velocity (v) with a predefined starting velocity threshold value (vₛₜₐᵣₜ) and
- increasing of the second-axle axle load (F₂₆) to the offroad starting axle load (F_{starting}) above the maximum axle load (Fₘₐₓ) only if the starting velocity threshold value (vₛₜₐᵣₜ) is undershot.

8. Axle center height controller according to one of the preceding claims, **characterized in that** it is designed to connect to a position sensing device (46), in particular a satellite navigation device, and is configured to perform
- sensing of a position (P) of the tractor-trailer combination (10)
- determination of whether the tractor-trailer combination (10) is in a predefined region (G), and
- increasing of the second-axle axle load (F₂₆) to the offroad starting axle load (F_{starting}) above the maximum axle load (Fₘₐₓ) only if the tractor-trailer combination (10) is in the predefined region (G).

9. Axle center height controller according to Claim 8, **characterized in that** the predefined region (G) is a nonpublic traffic area.

10. Axle center height controller according to one of the preceding claims, **characterized by** a digital memory in which the nominal axle load (F₁₈) and the maximum axle load (Fₘₐₓ) are stored, wherein the nominal axle load (F_{Nom}) and the maximum axle load (Fₘₐₓ) are linked, in particular to a spatial region (G) to which they apply.

11. Tractor-trailer combination having
(a) a semitrailer tractor (12) which comprises
(i) a front axle (16) and
(ii) at least one drive axle (18) which has a predefined nominal axle load (F_{Nom}),
(b) a semitrailer (14) which has
(i) a first axle (24) and
(ii) at least one second axle (26, 28), and
(c) an axle load adjusting device (36) which comprises
(i) an axle center height drive (30) for the first axle (24),
so that a drive-axle axle load (F₁₈) acting on the drive axle (18) can be changed by adjusting a center height (H) of the first axle (24), and
(ii) can be placed in a starting assistance mode in which the second-axle axle load (F₂₆, F₂₈) is increased to a starting-assistance axle load which is below a predefined maximum axle load (Fₘₐₓ),
**characterized by**
(d) an axle load adjusting device (36) having an axle center height controller according to one of the preceding claims.

12. Tractor-trailer combination according to Claim 11, **characterized by** an offroad starting sensing device (40, 42).

13. Tractor-trailer combination according to Claim 11 or 12, **characterized in that** the semitrailer comprises an axle load sensor (38) for measuring a second-axle axle load (F₂₆) which acts on the second axle (26).

14. Tractor-trailer combination according to one of Claims 12 to 13, **characterized in that** the offroad starting sensing device (40, 42) comprises
- an offroad starting control element (40) in a driver's cab (22) of the semitrailer tractor (12), and
- interacts with the axle load adjusting device (36) in such a way that the second-axle axle load (F₂₆) can be changed by activating the offroad starting control element according to at least one predefined activation sequence.

15. Method for operating a tractor-trailer combination (10) according to one of Claims 11 to 14, having the steps
(i) sensing activation of an offroad starting sensing device (40),
(ii) sensing of a predefined maximum axle load (Fₘₐₓ) for a second-axle axle load (F₂₄) acting on a second axle (24) of a semitrailer (14) of the tractor-trailer combination (10), and
(iii) increasing of the second-axle axle load (F₂₄) acting on an offroad starting axle load (F_{starting}) which is greater than the maximum axle load (Fₘₐₓ) if the offroad starting sensing device (40) is activated.

16. Method according to Claim 15, **characterized by** the step:
- sensing of a position (P) of the tractor-trailer combination (10), and
- determination of whether the position (P) is within a predefined region (G),
- wherein the second-axle axle load (F₂₄) is increased to the offroad starting axle load (F_{starting}), which is greater than the maximum axle load (Fₘₐₓ), only if the position lies within the region (G).

## Revendications

1. Commande de hauteur d'essieu pour un train routier (10) qui comprend
(a) un tracteur de semi-remorque (12) comprenant
- un essieu avant (16) et
- au moins un essieu moteur (18) qui possède une charge d'essieu nominale (F_{Nenn}) prédéfinie,
(b) une semi-remorque (14) qui possède
- un premier essieu (24) et
- au moins un deuxième essieu (26, 28), et
(c) un dispositif de réglage de la charge d'essieu (36) qui comprend un mécanisme d'entraînement en hauteur d'essieu (30) pour le premier essieu (24), de sorte qu'une charge d'essieu moteur (F₁₈) sur l'essieu moteur (18) peut être modifiée en réglant une hauteur (H) du premier essieu (24),
laquelle est conçue pour
- commuter dans un mode d'aide au démarrage, dans lequel la charge d'essieu du deuxième essieu (F₂₆, F₂₈) est augmentée à une charge d'essieu d'aide au démarrage, laquelle est toujours inférieure à une charge d'essieu maximale (Fₘₐₓ) légalement autorisée pour les zones de circulation publiques, égale à 130 % de la charge d'essieu nominale (F_{Nenn}),
**caractérisée en ce que**
la commande de hauteur d'essieu est arrangée pour
- détecter une activation d'un dispositif de détection de démarrage tout-terrain (40) et
- augmenter la charge d'essieu du deuxième essieu (F₂₆, F₂₈) à une charge d'essieu de démarrage tout-terrain (F_{anfahr}), laquelle est supérieure à la charge d'essieu maximale (Fₘₐₓ) lorsque le dispositif de détection de démarrage tout-terrain (40, 42) est activé.

2. Commande de hauteur d'essieu selon la revendication 1, **caractérisée en ce qu'**elle est configurée pour réduire la charge d'essieu du deuxième essieu (F₂₆, F₂₈) à une valeur ou la maintenir à une valeur qui est inférieure à la charge d'essieu maximale (Fₘₐₓ) lorsque le dispositif de détection de démarrage tout-terrain (40, 42) est désactivé.

3. Commande de hauteur d'essieu selon l'une des revendications précédentes, **caractérisée en ce qu'**elle est configurée pour détecter une charge d'essieu de deuxième essieu (F₂₆) qui agit sur le deuxième essieu (26) avec un détecteur de charge d'essieu (38), le dispositif de réglage de la charge d'essieu (36) étant arrangé pour modifier la charge d'essieu moteur (F₁₈) au moyen de la charge d'essieu du deuxième essieu (F₂₆).

4. Commande de hauteur d'essieu selon l'une des revendications précédentes, **caractérisée en ce que** la charge d'essieu de démarrage tout-terrain (F_{anfahr}) est toujours inférieure à 200 % de la charge d'essieu nominale (F_{Nenn}).

5. Commande de hauteur d'essieu selon l'une des revendications précédentes, **caractérisée par** un dispositif de mesure du temps, la commande de hauteur d'essieu étant arrangée pour
- détecter un intervalle de temps (Δt) qui s'est écoulé depuis un instant (t₁) à partir duquel la charge d'essieu (F₁₈) dépasse la charge d'essieu maximale (Fₘₐₓ),
- comparer cet intervalle de temps (Δt) avec une durée maximale (tₘₐₓ) prédéfinie et
- abaisser la charge d'essieu du deuxième essieu (F₂₆) à une valeur inférieure ou égale à la charge d'essieu maximale (Fₘₐₓ) lorsque la durée maximale (tₘₐₓ) est dépassée.

6. Commande de hauteur d'essieu selon l'une des revendications précédentes, **caractérisée en ce qu'**elle est arrangée pour détecter une vitesse de déplacement (v) du train routier (10) avec un dispositif de mesure de vitesse (44) et arrangée pour, automatiquement,
- détecter la vitesse de déplacement (v),
- comparer la vitesse de déplacement (v) avec une valeur de seuil de vitesse finale (v_{End}) prédéfinie et
- abaisser la charge d'essieu du deuxième essieu (F₂₆) à une valeur inférieure ou égale à la charge d'essieu maximale (Fₘₐₓ) lorsque la valeur de seuil de vitesse finale (v_{End}) est dépassée.

7. Commande de hauteur d'essieu selon l'une des revendications précédentes, **caractérisée en ce que** le dispositif de réglage de la charge d'essieu (36) est arrangé pour, automatiquement,
- détecter la vitesse de déplacement (v),
- comparer la vitesse de déplacement (v) avec une valeur de seuil de vitesse de démarrage (v_{Start}) prédéfinie et
- n'augmenter la charge d'essieu du deuxième essieu (F₂₆) à la valeur de la charge d'essieu de démarrage tout-terrain (F_{anfahr}) au-dessus de la charge d'essieu maximale (Fₘₐₓ) qu'en cas de franchissement vers le bas de la valeur de seuil de vitesse de démarrage (v_{Start}).

8. Commande de hauteur d'essieu selon l'une des revendications précédentes, **caractérisée en ce qu'**elle est configurée pour être reliée avec un dispositif de détection de la position (46), notamment un dispositif de navigation par satellite, et arrangée pour
- détecter une position (P) du train routier (10),
- déterminer si le train routier (10) se trouve dans une région (G) prédéfinie, et
- n'augmenter la charge d'essieu du deuxième essieu (F₂₆) à la charge d'essieu de démarrage tout-terrain (F_{anfahr}) au-dessus de la charge d'essieu maximale (Fₘₐₓ) que lorsque le train routier (10) se trouve dans la région (G) prédéfinie.

9. Commande de hauteur d'essieu selon la revendication 8, **caractérisée en ce que** la région prédéfinie (G) est une zone de circulation non publique.

10. Commande de hauteur d'essieu selon l'une des revendications précédentes, **caractérisée par** une mémoire numérique dans laquelle sont stockées la charge d'essieu nominale (F_{Nenn}) et la charge d'essieu maximale (Fₘₐₓ), la charge d'essieu nominale (F_{Nenn}) et la charge d'essieu maximale (Fₘₐₓ) étant notamment combinées avec une région (G) dans l'espace à laquelle elles s'appliquent.

11. Train routier qui comprend
(a) un tracteur de semi-remorque (12) comprenant
(i) un essieu avant (16) et
(ii) au moins un essieu moteur (18) qui possède une charge d'essieu nominale (F_{Nenn}) prédéfinie,
(b) une semi-remorque (14) qui possède
(i) un premier essieu (24) et
(ii) au moins un deuxième essieu (26, 28), et
(c) un dispositif de réglage de la charge d'essieu (36) qui
(i) comprend un mécanisme d'entraînement en hauteur d'essieu (30) pour le premier essieu (24), de sorte qu'une charge d'essieu moteur (F₁₈) sur l'essieu moteur (18) peut être modifiée en réglant une hauteur (H) du premier essieu (24), et
(ii) peut être amené dans un mode d'aide au démarrage dans lequel la charge d'essieu du deuxième essieu (F₂₆, F₂₈) est augmentée à une charge d'essieu d'aide au démarrage, laquelle est inférieure à une charge d'essieu maximale (Fₘₐₓ) prédéfinie,
**caractérisé par**
(d) un dispositif de réglage de la charge d'essieu (36) muni d'une commande de hauteur d'essieu selon l'une des revendications précédentes.

12. Train routier selon la revendication 11, **caractérisé par** un dispositif de détection de démarrage tout-terrain (40, 42).

13. Train routier selon la revendication 11 ou 12, **caractérisé en ce que** la semi-remorque comprend un détecteur de charge d'essieu (38) pour mesurer une charge d'essieu du deuxième essieu (F₂₆) qui agit sur le deuxième essieu (26).

14. Train routier selon l'une des revendications 12 et 13, **caractérisé en ce que** le dispositif de détection de démarrage tout-terrain (40, 42)
- comprend un élément de commande de démarrage tout-terrain (40) dans une cabine de conducteur (22) du tracteur de semi-remorque (12) et
- interagit avec le dispositif de réglage de la charge d'essieu (36) de telle sorte que la charge d'essieu du deuxième essieu (F₂₆) peut être modifiée en actionnant l'élément de commande de démarrage tout-terrain conformément à au moins une séquence d'actionnement prédéfinie.

15. Procédé d'exploitation d'un train routier (10) selon l'une des revendications 11 à 14, comprenant les étapes suivantes :
(i) détection d'une activation d'un dispositif de détection de démarrage tout-terrain (40),
(ii) détection d'une charge d'essieu maximale (Fₘₐₓ) prédéfinie pour une charge d'essieu de deuxième essieu (F₂₄) sur un deuxième essieu (24) d'une semi-remorque (14) du train routier (10) et
(iii) augmentation de la charge d'essieu du deuxième essieu (F₂₄) à une charge d'essieu de démarrage tout-terrain (F_{anfahr}), laquelle est supérieure à la charge d'essieu maximale (Fₘₐₓ) lorsque le dispositif de détection de démarrage tout-terrain (40) est actionné.

16. Procédé selon la revendication 15, **caractérisé par** les étapes suivantes :
- détection d'une position (P) du train routier (10) et
- détermination du fait que la position (P) se trouve ou non dans une région (G) prédéfinie,
- la charge d'essieu du deuxième essieu (F₂₄) n'étant augmentée à la charge d'essieu de démarrage tout-terrain (F_{anfahr}), laquelle est supérieure à la charge d'essieu maximale (Fₘₐₓ), que lorsque la position se trouve à l'intérieur de la région (G).
